# EUROPEAN PATENT SPECIFICATION

(11) **EP 0 392 604 B1**
(45) Date of publication and mention of the grant of the patent: **09.11.1994**
(21) Application number: 90200834.1
(22) Date of filing: 06.04.1990
(51) Int. Cl.: G21C 9/016, G21C 13/10

(54) **Protection system for the reactor-containing building in nuclear power stations**
Schutzsystem für das Reaktorschutzgebäude in einer Kernkraftwerksanlage
Système de protection pour le batiment réacteur dans une centrale nucléaire

(30) Priority: 13.04.1989 IT 2011589
(43) Date of publication of application: 17.10.1990
(73) Proprietor: ENTE NAZIONALE PER L'ENERGIA ELETTRICA - (ENEL), I-00198 Roma (IT)
(72) Inventor: Turricchia Arnaldo, I-00135 Rome (IT)
(74) Representative: Fusina, Gerolamo

(56) References cited:
- DE-A- 2 459 339
- DE-A- 2 622 050
- FR-A- 2 341 181
- US-A- 3 718 539
- US-A- 3 935 063

## Description

This invention relates to a system for protecting the containment floor of the reactor-containment building in a nuclear power station.

A protection system for the reactor-containment building which is able to minimize damage deriving from the melt-down of the reactor core is of extreme importance in a nuclear power station.

The reactor is normally housed in one or two mutually communicating containment chambers, its lower part always being contained in a lower chamber in a position corresponding with the foundation floor.

If the core melts down, the resultant molten material deriving from it perforates the pressure vessel and pours into said underlying lower chamber. Here, the molten material erodes the normally concrete chamber walls, and in particular erodes the base floor to then penetrate into the ground where it cools, releasing radioactivity and contaminating the environment around the power station.

A solution has been proposed which involves installing under the reactor pressure vessel a crucible of graphite or other refractory material which should retain any molten material from the pressure vessel, so as to prevent its interaction with said lower chamber.

This solution has at least two drawbacks.

Firstly, said molten material is a molten mass with internal heat generation, however heat transfer downwards is blocked by the crucible and upwards is a minimum because of the low heat transfer coefficient of air, with the result that its temperature increases well above the melting point. The consequence is that in the long term the strength of the refractory crucible can decline.

Secondly, a large fraction of the radioactive products is released by evaporation from the molten material into the reactor surroundings, with increase in the radioactivity of the environment.

Another proposed solution is based on dispersing the heat of the molten metal via the base floor of said lower chamber by means of a water-fed coil embedded in the base floor.

However in this case it can happen that an excessive temperature gradient arises through the base floor with the danger of its fracturing and the possibility of the molten material attacking the coil, so that fission products escape into the external environment by this path.

From FR-A-2 341 181 a further solution is known consisting of a structure made up of perforated superimposed plates located in the lower plenum inside the pressure vessel. This structure can, at most, delay the melt progression and the attack of the vessel bottom. After melt-through of the vessel bottom the melt can attack the containment floor and violate the containment integrity, due to the fact that inside the pressure vessel only a few dispersing plates can be accomodated and there is not enough water to keep the core debris submerged.

A further device for cooling and collecting the molten material in case of melt-down of the reactor core is disclosed in DE-A-2 459 339. This device comprises a cooling tank of good heat conducting metal disposed above the containment floor, the inner side of said tank which faces the reactor vessel being covered by a bed of refrectory material, and at a little distance above the said cooling tank a protective latticework structure consisting of a few superimposed layers of a plurality of double T-shaped beams arranged parallel to one another in each layer and at an angle of 90° in adjacent layers, which protective structure serves to protect the cooling tank from the weight of falling heavy parts. The lower side of the cooling tank is supported by means of rods and is surrounded by a cooling chamber filled with a cooling fluid and communicating by means of outlet channels with an external chamber. In case of melt-down of the reactor core the large parts falling down are retained by said protective latticework structure, while the small parts and the molten material pour through the latticework structure and fall into the cooling tank,.

The object of the present invention is to propose a protection system for the containment floor of the reactor-containment building which represents a valid and effective solution to the problems deriving from melt-down of the reactor core, and in particular safeguards the containment building floor against attack by molten core.

This object is attained by a protection system according to the characterising part of claim 1.

One embodiment of the present invention is described hereinafter by way of non-limited example with reference to the accompanying drawings, in which:
Figure 1 shows a protection system for the containment floor of the reactor-containment building according to the invention;
Figure 2 is a detailed view of the protection system of Figure 1;
Figure 3 is a perspective view of a core catching structure of the protection system of Figure 1;
Figure 4 shows the structure of Figure 3 in an operating situation;
Figure 5 shows a modification of the component elements of the structure of Figure 3;
Figures 6, 7, 8, 9, 10, 11, show further modifications of the component elements of the structure of Figure 3;
Figure 12 shows the protection system illustrated in Figure 2 but with an additional structure;
Figure 13 shows a modification of the protection system illustrated in Figure 2;
Figure 14 is a schematic illustration of a modification of the protection system of Figure 1.

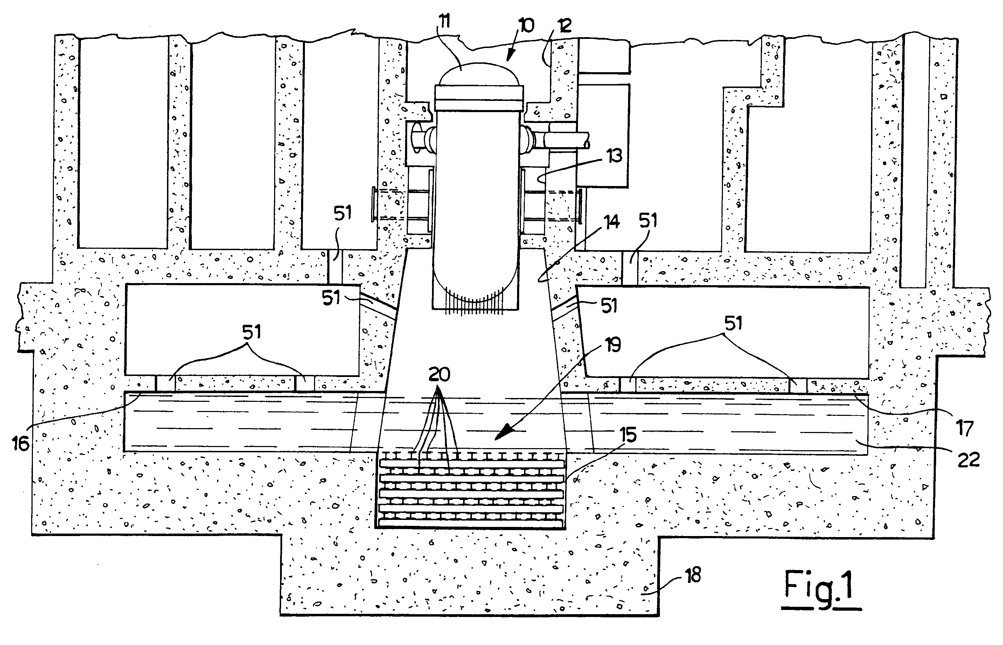

Figure 1 represents a vertical section through the lower part of a building of a nuclear power station containing a reactor 10.

In this figure the pressure vessel 11 containing the core of the reactor 10 can be seen.

The reactor 10 is housed in three chambers of said building, namely an upper chamber 12, an intermediate chamber 13 and a lower chamber 14.

The lower chamber 14 houses the lower part of the reactor 10 and comprises a base portion 15.

There are also two lower side chambers 16 and 17 which extend from the lower chamber 14 and communicate with it.

The base portion 15 of the lower chamber 14 is in a position corresponding with the containment floor 18.

The base portion 15 of the lower chamber 14 houses a structure 19 formed from various layers of beams 20.

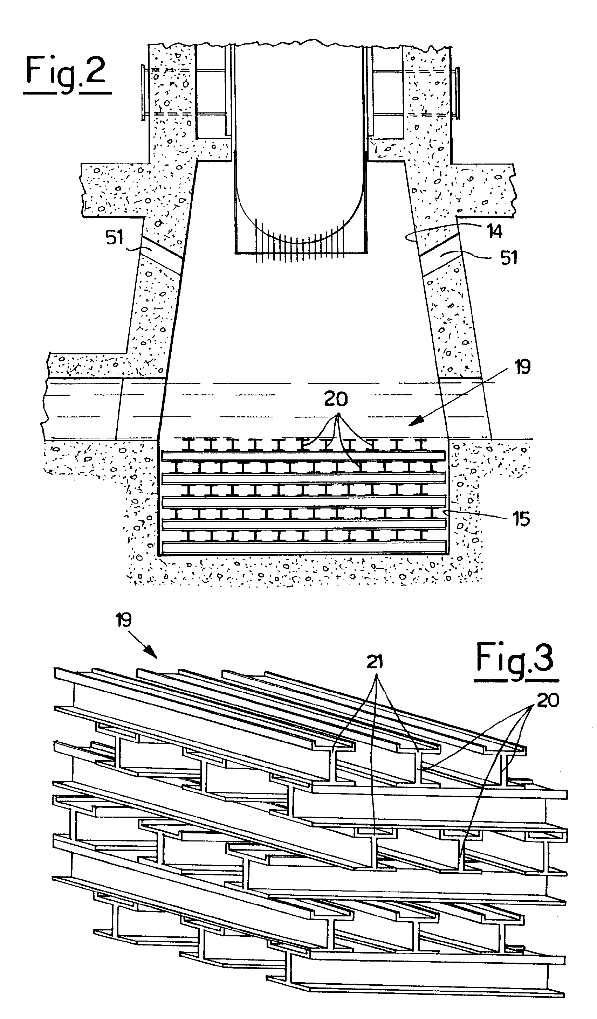

Figure 2 is an enlarged detailed view of the chamber 14 with its base portion 15 and the core catching structure 19.

Figure 3 is a detailed partial view of the core catching structure 19.

In the structure 19 each layer of beams 20 is composed of a series of parallel beams. In addition, the axes of the beams 20 of one layer are disposed at 90° to the axes of the beams 20 of an adjacent layer. Finally, the beams 20 of a given layer are offset from the beams 20 of the next layer wherein the beams have the same orientation as in said given layer. Preferably, each beam 20 of said given layer is positioned to correspond with the space existing between two adjacent beams 20 of said next layer.

Each beam 20 has a double-T-cross-section, the upper flange 21 of the beam preferably being of U shape. The beams are of stainless steel.

The lower part of the chamber 14, and therefore including the base portion 15, and the side chambers 16 and 17 are filled with cooling fluid 22, such as water with or without borate. By this means the core catching structure 19 is submerged in the cooling fluid 22.

If the core of the reactor 10 melts down, the resultant molten material perforates the pressure vessel 11 and falls into the cooling fluid 22 and descends towards the core catching sructure 19.

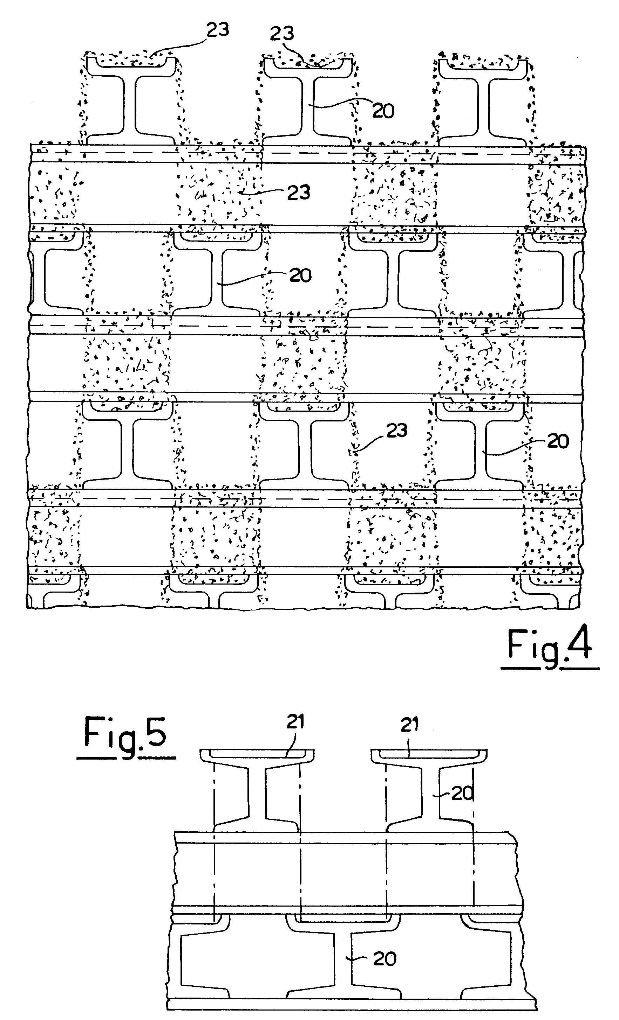

On coming into contact with the structure 19 the molten material is obliged by the structure to follow the path partly shown in Figure 4, in which the molten material is indicated by 23.

Basically, the structure 19 compels the descending molten material 23 to follow a very tortuous path so that the molten material is distributed and spreads along the structure 19 in layers. In this manner the molten material is cooled and solidifies before reaching the bottom of the portion 15 and therefore before contacting the containment floor 18.

Essentially, a large surface extension of the molten material is obtained in relation to its volume, ie the molten material is distributed over a large heat transfer surface, so allowing rapid and efficient cooling of the molten material itself.

A protection system for the reactor-containment building is thus provided which represents a valid and effective solution to the initially stated problems deriving from the melt down of the reactor core.

It should be noted that such a protection system is very simple and consequently economical. Moreover, its simplicity and the absence of active components makes it particularly reliable.

The U shape of the upper flanges 21 of the beams 20 results in channels which are better able to retain that portion of the molten material which is deposited on these flanges, as can be seen in Figure 4, and which therefore ensure better distribution of the molten material along the layers of the core catching structure 19.

The flanges 21 of each layer of beams can also partially overlap the flanges 21 of the beams in the next layer wherein the beams have the same orientation, as shown in Figure 5. This ensures than all the molten material which falls from the channels formed by the overlying flanges 21 collects in the channels formed by the underlying flanges 21, so improving the distribution and stratification of the molten metal.

The lower flanges of the beams could also be made of U shape as the upper flanges, in order to retain further portions of molten material.

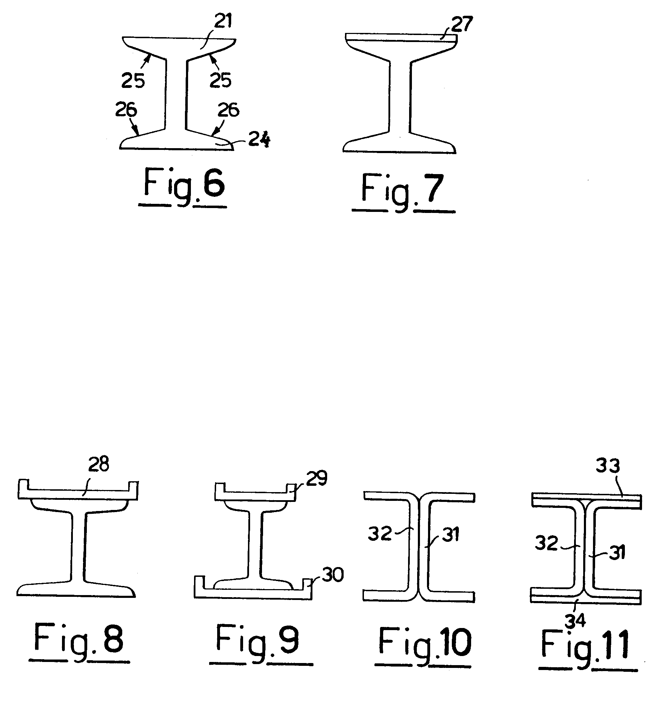

Both the upper flanges 21 and the lower flanges 24 can have inclined walls 25 and 26 respectively, as shown in Figure 6. This prevents vapour bubbles settling on these walls and hindering heat transfer between the beam and cooling fluid.

Composite beams, ie beams formed from two different materials can be convenient, such as a beam of a given material which is upperly covered with a different material more resistant to high temperature.

Figure 7 shows for example the beam of Figure 6 with an upper covering 27 of high-temperature resistant material.

Figure 8 shows a beam with an upper U-shaped covering 28 of high-temperature resistant material, acting as the collection channel for the molten material.

Figure 9 shows a beam with an upper covering 29 and a lower covering 30 both of high-temperature resistant material and both of U shape with the flanges facing upwards, to act as collection channels for the molten material.

As shown in Figure 10, the beam can also be formed from two plates 31 and 32 each bent to C-shape and joined together so that the flanges all point outwards.

Figure 11 shows the beam of Figure 10 formed from the two plates 31 and 32, and provided with an upper covering 33 and a lower covering 34 both of high-temperature resistant material.

The described beams, whatever their configuration and composition, can be rigidly connected to each other at their intersection, such as by welding or bolting, or by means of straps which allow free differential expansion of the beams, so as to form a block structure which maintains its initial geometry even when localised pressure forces are present, generated by the violent interaction between the molten material and the cooling fluid present in the chamber portion 15.

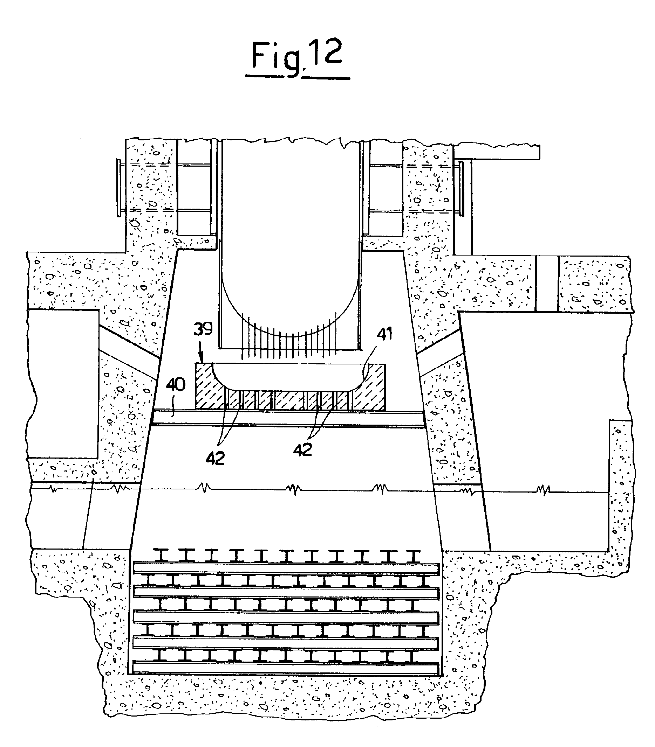

A further structure for temporarily collecting and distributing the molten material can be mounted below the reactor 10 and above the cooling fluid level as shown in Figure 12.

This structure, which is indicated by 39 and is supported by a support base 40, comprises a collection cavity 41 in which the molten material falling from the reactor 10 is temporarily retained, and also comprises a series of through holes 42 downstream of the cavity 41 for gradually letting fall and distributing the molten material over the underlying surface of the cooling fluid.

The purpose of the structure 39 is to avoid the risk of "vapour explosions" due to the violent conversion of heat energy into mechanical energy which could occur when the molten material comes into contact with cooling fluid within a very short time, and also to provide pre-distribution of the molten material over a larger area of cooling fluid surface.

Said structure 39 could also be disposed in the cooling fluid above the core catching structure 19. However, this does not obviate the risk of "vapour explosions", although said pre-distribution of the molten material is obtained.

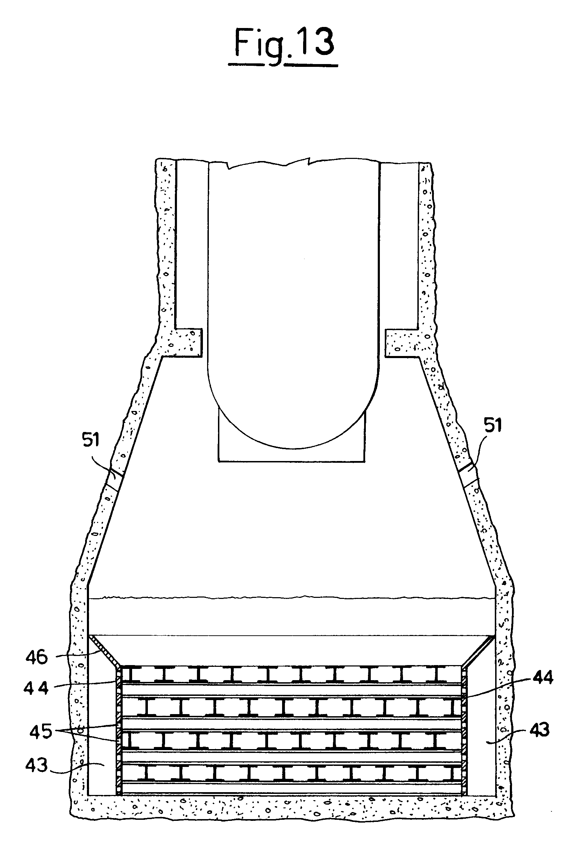

A space can also be left free about the core catching structure 19 to allow inspection and facilitate assembly and dismantling of the said structure 19, as shown in Figure 13. The space is indicated by 43 and is provided with a cover 44 which comprises through holes 45 and has an upper funnel-shaped portion 46 which does not comprise holes. The holes 45 allow cooling fluid communication between the spaces of the structure 19 and the space 43, so that cooling fluid is available throughout the entire base portion 15 of the chamber 14. The funnel-shaped portion 46 of the cover 44 conveys the molten material descending towards the structure 19, so avoiding the risk of tne molten material evading the structure 19.

After the molten material has been redistributed within the structure 19 and has cooled, it must be kept covered with cooling fluid, or in other words make-up cooling fluid must be added to compensate that which evaporates and leaves the cavity, after the saturation temperature is reached.

The side chambers 16 and 17 communicating with the chamber 14 are provided for this reason (Figure 1). They are able to contain a large reserve of cooling fluid.

Generally this reserve of cooling fluid can be held either in a single chamber communicating with the chamber 14 or be divided between two or more chambers communicating with the chamber 14, depending on the structural requirements of the containment building.

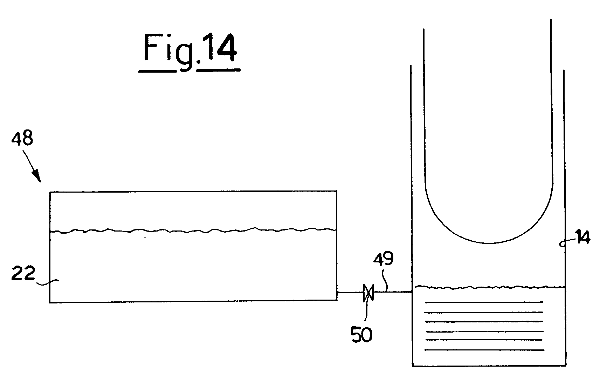

Alternatively, as illustrated schematically in Figure 14, the side chamber or chambers can be replaced by a reserve tank 48 located inside or outside the building containing the reactor 10 and filled with cooling fluid 22. The tank 48 communicates with the chamber 14 for example via a pipe 49 containing a valve 50. In the case of an emergency in which the molten material escapes from the pressure vessel 11 of the reactor 10, the valve 50 can be operated either manually by the operator or by a temperature sensor positioned in proximity to the reactor 10, and thus connect the tank 48 to the chamber 14.

Passages 51, visible overall in Figure 1, are provided in the building containing the reactor 10 to enable the steam which forms in the chamber 14 and side chambers 16 and 17 by evaporation of the cooling fluid to flow into other chambers of the building in which the steam can be cooled and condensed by active or passive cooling means or be conveyed to the outside through filters when the pressure exceeds a predetermined value. In the first case the condensed steam flows back into the chamber 14 and side chambers 16 and 17 through the passages 51, and therefore such side chambers could be very small or could even be dispensed with, as the evaporated cooling fluid is continuously recovered.

The chamber 14 increases in cross-section in the direction towards the core catching structure 19, to enable the structure 19 to have a large collection area.

This core catching structure could also combine beams of different shape. For example, the initial upper layers could consist of double T-shaped beams with flat flanges, whereas all the other lower layers could consist or double-T-shaped beams with U-shaped flanges such as those shown in Figures 3, 4, 5, 8, 9.

This combination is useful in preventing damage to the initial upper layers of the core catching structure 19. In this respect, the molten material which is still at high temperature remains on these initial beam layers only as a small thickness because of the flat flanges of these latter beams, and tends to slip off and stop on the beams with U-shaped flanges of the lower layers, by which time its temperature is reduced.

To further reduce the depth of molten material which remains on the upper flange 21, it can be advisable to shape these flanges with an upperly facing convexity.

The beams can be or a material other than stainless steel, for example they can be of carbon steel construction. In this case the cooling fluid must be such as not to rust the beams (if water is used as the cooling fluid it must be treated chemically to prevent rusting of the beams). Alternatively, the beam material can be alloys resistant to high temperature (supersteels, superalloys) generally containing one or more of the following elements: chromium, nickel, tungsten, molybdenum, niobium, tantalum and cobalt. The beams can also be constructed of graphite or other refractory materials, for example oxide or carbide based. The composite beams, such as those shown in Figures 7, 8, 9 and 11 can be formed by combining two of said materials; for example the beam body can be of stainless steel and its covering of superalloy or a refractory material.

The beams do not necessarily have to be of double-T-shaped cross-section, but can be of any other useful shape, such as C, L, T, Z etc.

The dimensional ratios of the various component portions of each beam can also vary.

The beam arrangement can follow a geometry different from that described and illustrated.

The angle of intersection of the beams of the various layers can be other than 90°.

The shape of the chamber below the reactor and of the stack of beams can be that considered most suitable, for example the plan section can be circular or polygonal, and the vertical section can be either flared as in the example, or not flared.

The cooling fluid can be any fluid able to cool the molten material.

It is apparent that a protection system according to the invention can be applied to any type of reactor and to any type of reactor-containment building.

## Claims

1. A system for protecting the containment floor (18) of the reactor-containment building in a nuclear power station, in case of the melt-down of the reactor core, in which containment building the pressure vessel (11) of the reactor (10) is at least partly housed in a chamber (14) comprising a portion (15) below the reactor (10), said system comprising a structure (19) including superimposed layers of a plurality of beams (20) arranged parallel to one another in each layer and at an angle of for example 90° in adjacent layers, said structure (19) being located in said chamber portion (15) below the reactor (10), characterised in that said structure (19) is submerged in a cooling fluid (22) and that to enable said structure (19) to catch and distribute over a large heat transfer area the molten material (23) coming out from the pressure vessel (11), such that portions of the molten material (23) are cooled and solidified on said beams (20) before reaching the floor (18) of the containment building so that said containment floor (18) receives no molten material, said beams (20), made preferably of stainless steel, in at least a part of the superimposed layers have upper flanges (21) of U-shape resulting in channels able to retain portions of molten material (23), and that the beams (20) of a given layer are offset from the beams (20) of another layer wherein the beams have the same orientation as in said given layer.

2. A system as claimed in claim 1, characterised in that each beam (20) has a double T, a C, an L, a T or a Z-shaped cross-section.

3. A system as claimed in claim 1, characterised in that the flanges (21) of the beams (20) in each layer partially overlap the flanges (21) of the beams (20) in the next layer wherein the beams have the same orientation.

4. A system as claimed in claim 1, characterisec in that the beams (20) have a U-shaped lower flange (24).

5. A system as claimed in claim 1, characterised in that the beams (20) have upper and lower flanges (21,24) with inclined walls (25,26).

6. A system as claimed in claim 1, characterised in that the beams (20) comprise at least one portion (27, 28, 29, 30, 33, 34) formed from a material having high temperature resistance.

7. A system as claimed in claim 1, characterised in that interposed between the reactor pressure vessel (11) and said core catching structure (19) a further perforated structure (39) is provided for temporarily retaining the molten material prior to contact with said cooling fluid (22) and for letting pour the material gradually through holes (42).

8. A system as claimed in claim 1, characterised in that said core catching structure (19) located in said lower chamber portion (15) is surrounded by a perforated cover (44) disposed at a distance from the wall of the lower chamber portion (15), said cover (44) having a non-perforated upper funnel-shaped portion (46) extending outwardly to said wall of the lower chamber portion (15), thereby defining-a free space (43) surrounding the core catching structure (19) for external inspection of it.

## Patentansprüche

1. Ein Schutzsystem für das Schutzfundament (18) des Reaktorschutzgebäudes in einer Kernkraftwerksanlage im Falle eines Abschmelzens des Reaktorkerns, wobei in dem Schutzgebäude der Druckbehälter (11) des Reaktors (10) wenigstens teilweise in einer Kammer (14) untergebracht ist, die ein Kammerteil (15) unter dem Reaktor (10) aufweist, das System eine Struktur (19) von aufeinander angeordneten Lagen einer Mehrzahl von Trägern (20) enthält, die in jeder Lage zueinander parallel und in den folgenden Lagen in einem Winkel von z.B. 90° angeordnet sind, die Struktur (19) sich in dem Kammerteil (15) unter dem Reaktor (10) befindet, dadurch gekennzeichnet, daß die Struktur (19) in eine Kühlflüssigkeit (22) eingetaucht ist, und daß die Träger (20), die vorzugsweise aus nichtrostendem Stahl sind, in wenigstens einem Teil der aufeinander angeordneten Lagen U-förmige Oberstege (21) aufweisen, die Kanäle zum Stauen von Teilen des gescholzenen Materials (23) bilden, damit die Struktur (19) in der Lage ist, das aus dem Druckbehälter (11) kommende geschmolzene Material (23) derart aufzufangen und über eine große Wärmeübertragungsfläche zu verteilen, daß Teile des geschmolzenen Materials (23), bevor sie das Fundament (18) des Schutzgebäudes erreichen, auf den Trägern (20) abgekühlt und erstarrt sind, so daß das Fundament (18) kein geschmolzenes Material aufnimmt, und daß die Träger (20) einer gegebenen Lage zu den Trägern (20) einer anderen Lage versetzt angeordnet sind, wobei die Träger dieselbe Orientierung wie diejenigen der genannten gegebenen Lage aufweisen.

2. Ein System nach Anspruch 1, dadurch gekennzeichnet, daß jeder Träger (20) einen Doppel-T-, einen C-, einen L-, einen T- oder einen Z-förmigen Querschnitt aufweist.

3. Ein System nach Anspruch 1, dadurch gekennzeichnet, daß sich die Stege (21) der Träger (20) in jeder Lage mit den Stegen (21) der Träger (20) der nächsten Lage teilweise überlappen, wobei die Träger dieselbe Orientierung aufweisen.

4. Ein System nach Anspruch 1, dadurch gekennzeichnet, daß die Träger (20) einen U-förmigen Untersteg (24) aufweisen.

5. Ein System nach Anspruch 1, dadurch gekennzeichnet, daß die Träger (20) Ober- und Unterstege (21, 24) mit geneigten Wänden (25, 26) aufweisen.

6. Ein System nach Anspruch 1, dadurch gekennzeichnet, daß die Träger (20) wenigstens einen Teil (27, 28, 29, 30, 33, 34) aufweisen, der aus einem Material mit hoher Hitzebeständigkeit ist.

7. Ein System nach Anspruch 1, dadurch gekennzeichnet, daß zwischen dem Reaktordruckbehälter (11) und der Kernauffangstruktur (19) eine weitere perforierte Struktur (39) angeordnet ist, um das Schmelzmaterial vor dem Kontakt mit der Kühlflüssigkeit (22) zeitweise zu stauen und um das Material langsam durch Öffnungen (42) fließen zu lassen.

8. Ein System nach Anspruch 1, dadurch gekennzeichnet, daß die Kernaufnahmestruktur (19) im unteren Kammerteil (15) von einem perforierten Schutzmantel (44) umgeben ist, der in einem Abstand zur Wand des unteren Kammerteils (15) angeordnet ist, wobei der Schutzmantel (44) einen nichtperforierten oberen trichterförmigen Teil (46) aufweist, welcher sich nach außen zur Wand des unteren Kammerteils (15) erstreckt und auf diese Weise einen Freiraum (43) um die Kernauffangstruktur (19) zu deren äußeren Inspektion bestimmt.

## Revendications

1. Système destiné à protéger, dans une centrale nucléaire, en cas de fusion du coeur du réacteur, le plancher de confinement (18) d'un bâtiment de confinement d'un réacteur, dans lequel l'enceinte pressurisée (11) du réacteur (10) est au moins partiellement logée dans une chambre (14) comprenant une partie (15) au-dessous du réacteur (10), ledit système comprenant une structure (19) formée de couches superposées d'une pluralité de poutres (20) qui sont dans chaque couche parallèles les unes aux autres et décalées angulairement de, par exemple, 90° dans des couches voisines, ladite structure (19) étant située dans ladite partie de chambre (15) qui se trouve au-dessous du réacteur (10), caractérisé en ce que ladite structure (19) est immergée dans un fluide de refroidissement (22) et en ce que pour permettre à ladite structure (19) de capter et de distribuer par une grande surface de transfert de chaleur les matières en fusion (23) sortant de l'enceinte pressurisée (11) de manière que des parties des matières en fusion (23) soient refroidies et solidifiées sur lesdites poutres (20) avant d'atteindre le plancher (18) du bâtiment de confinement de façon que ledit plancher de confinement (18) ne reçoive pas de matière en fusion, lesdites poutres (20), de préférence en acier inoxydable, dans au moins une partie des couches superposées ont des semelles supérieures (21) en U formant des canaux capables de retenir des portions de matières en fusion (23), et en ce que les poutres (20) d'une couche donnée sont décalées par rapport aux poutres (20) d'une autre couche où les poutres ont la même orientation que dans ladite couche donnée.

2. Système suivant la revendication 1, caractérisé en ce que chaque poutre (20) comporte une section en double T, en C, en L, en T ou en Z.

3. Système suivant la revendication 1, caractérisé en ce que, dans chaque couche, les semelles (21) des poutres (20) recouvrent partiellement les semelles (21) des poutres (20) dans la couche suivante où les poutres ont la même orientation.

4. Système suivant la revendication 1, caractérisé en ce que les poutres (20) comportent une semelle inférieure (24) en U.

5. Système suivant la revendication 1, caractérisé en ce que les poutres (20) ont des semelles supérieures et inférieures (21, 24) comportant des flancs inclinés (25, 26).

6. Système suivant la revendication 1, caractérisé en ce que les poutres (20) comprennent au moins une partie (27, 28, 29, 30, 33, 34) en une matière résistant aux hautes températures.

7. Système suivant la revendication 1, caractérisé en ce que, interposée entre l'enceinte pressurisée (11) du réacteur et ladite structure de captage du coeur (19), est prévue une autre structure perforée (39) destinée à retenir temporairement les matières en fusion avant qu'elles entrent en contact avec ledit fluide de refroidissement (22) et à laisser couler graduellement les matières dans des trous (42).

8. Système suivant la revendication 1, caractérisé en ce que ladite structure de captage du coeur (19) située dans ladite partie inférieure de chambre (15) est entourée d'une couverture perforée (44) placée à une certaine distance du mur de la partie inférieure de chambre (15), ladite couverture (44) comportant une partie supérieure non perforée en entonnoir (46) ouvert vers l'extérieur vers ledit mur de la partie inférieure de chambre (15), définissant ainsi un espace libre (43) entourant la structure de captage du coeur (19) et destiné à son inspection interne.
